# EUROPÄISCHE PATENTANMELDUNG

(11) **EP 1 445 233 A1**
(43) Veröffentlichungstag der Anmeldung: **11.08.2004**
(21) Anmeldenummer: 04002348.3
(22) Anmeldetag: 03.02.2004
(51) Int. Cl.: B66F 9/20, F16G 13/16

(54) **Leitungsführung an dem Hubgerüst eines Flurförderzeugs**

(30) Priorität: 04.02.2003 DE 10304475
(71) Anmelder: STILL GMBH, D-22113 Hamburg (DE)
(72) Erfinder: Kutzner, Jörg, 21147 Hamburg (DE); Schönewald, Peter, 22145 Stapelfeld (DE); Wahrlich, Thomas, 25499 Tangstedt (DE)
(74) Vertreter: Lang, Michael

(57) **Zusammenfassung**

Gegenstand der Erfindung ist ein Hubgerüst für ein Flurförderzeug mit einem nicht anhebbaren Standmast (1) und mindestens einem an dem Standmast (1) verschiebbar geführten Ausfahrmast (2). Mindestens eine flexible Schlauchleitung (3) ist vorgesehen, die den Standmast (1) mit dem Ausfahrmast (2) und gegebenenfalls einen ersten Ausfahrmast (2) mit einem zweiten Ausfahrmast (2) verbindet, wobei das Hubgerüst ein Mittel zum Führen der flexiblen Schlauchleitung (3) aufweist. Erfindungsgemäß ist das Mittel zum Führen der flexiblen Schlauchleitung (3) von einer Kette (5) gebildet ist. Die Kette (5) ist derart ausgeführt, dass, ausgehend von einer Längsausrichtung zweier miteinander verbundener Kettenglieder, die Kettenglieder relativ zueinander nur in einer einzigen Richtung verdrehbar sind. Die Kette (5) ist derart ausgeführt, dass mindestens ein Kettenglied formschlüssig mit der flexiblen Schlauchleitung (3) verbindbar.

## Beschreibung

Die Erfindung betrifft ein Hubgerüst für ein Flurförderzeug mit einem nicht anhebbaren Standmast und mindestens einem an dem Standmast verschiebbar geführten Ausfahrmast, wobei mindestens eine flexible Schlauchleitung vorgesehen ist, die den Standmast mit dem Ausfahrmast und gegebenenfalls einen ersten Ausfahrmast mit einem zweiten Ausfahrmast verbindet und wobei das Hubgerüst ein Mittel zum Führen der flexiblen Schlauchleitung aufweist.

Gattungsgemäße Hubgerüste werden bei Flurförderzeugen verschiedener Art, beispielsweise bei Gegengewichtsgabelstaplem, Schubmaststaplern oder Hochhubwagen eingesetzt. Der Standmast ist nicht anhebbar an einem Rahmen des Flurförderzeugs befestigt. Der Ausfahrmast ist in der Regel mittels Rollen in vertikaler Richtung beweglich an dem Standmast geführt. Bei Anordnungen mit zwei Ausfahrmasten ist ein zweiter Ausfahrmast vertikal verschiebbar an dem ersten Ausfahrmast geführt, welcher wiederum an dem Standmast verschiebbar geführt ist. An dem am weitesten ausfahrbaren Ausfahrmast ist ebenfalls mittels Rollen ein Hubschlitten geführt, an welchem ein meist als Gabel ausgeführtes Lastaufnahmemittel befestigt ist.

Im Bereich des Hubschlittens oder des Lastaufnahmemittels sind häufig hydraulisch arbeitende Zusatzaggregate angeordnet. Dabei kann es sich beispielsweise um einen Seitenschieber oder eine Neigevorrichtung handeln. Die Zusatzaggregate sind über flexible Leitungen mit einem nicht anhebbaren Teil des Flurförderzeugs verbunden. Diese flexible Schlauchleitung erstreckt sich von dem Fahrzeugrahmen über den Standmast, den Ausfahrmast und gegebenenfalls den zweiten Ausfahrmast zu dem Hubschlitten.

Um während eines Hubvorgangs die Höhenänderung zwischen dem Standmast und dem Ausfahrmast ausgleichen zu können, weist die flexible Schlauchleitung in diesem Bereich einen nach unten durchhängenden Bogen auf. Bei Hubgerüsten des Standes der Technik ist die flexible Schlauchleitung im Bereich des Bogens in horizontaler Richtung mittels Führungsschienen, die gegenüberliegend an dem Standmast und dem Ausfahrmast bzw. an dem ersten Ausfahrmast und dem zweiten Ausfahrmast angeordnet sind, geführt. Weiter ist bei den bekannten Hubgerüsten in den Führungsschienen ein Bauteil zur Schlauchumlenkung geführt, das während des Bewegens des Ausfahrmasts in den Führungsschienen abrollt. Im praktischen Einsatz des Hubgerüsts kann es jedoch vorkommen, dass die flexiblen Schlauchleitungen aus den Führungsschienen laufen, was in der Folge zu einer Beschädigung der Schlauchleitungen führen kann.

Der Erfindung liegt daher die Aufgabe zu Grunde, ein Hubgerüst mit einer verbesserten Führung der flexiblen Schlauchleitungen zur Verfügung zu stellen.

Diese Aufgabe wird erfindungsgemäß dadurch gelöst, dass das Mittel zum Führen der flexiblen Schlauchleitung von einer Kette gebildet ist. Die Führung der flexiblen Schlauchleitung erfolgt dabei ausschließlich durch die Kette. Weitere Führungselemente, insbesondere Führungsschienen sind nicht vorgesehen. Die flexible Schlauchleitung ist in regelmäßigen oder unregelmäßigen Abständen formschlüssig mit der Kette verbunden, so dass die flexible Schlauchleitung während des Betriebs des Flurförderzeugs jederzeit sicher geführt ist.

Zweckmäßigerweise ist die Kette derart ausgeführt, dass als Relativbewegung zweier miteinander verbundener Kettenglieder ausschließlich ein Verdrehen um eine einzige Achse vorgesehen ist. Eine Bewegung der Kette in eine unerwünschte Richtung kann verhindert werden, wenn die Kette derart ausgeführt ist, dass, ausgehend von einer Längsausrichtung zweier miteinander verbundener Kettenglieder, die Kettenglieder relativ zueinander nur in einer einzigen Richtung verdrehbar sind. Die Lage der flexiblen Schlauchleitung wird durch die Kette sichergestellt, indem die Kette derart ausgeführt ist, dass mindestens ein Kettenglied formschlüssig mit der flexiblen Schlauchleitung verbindbar ist. Beispielsweise im Kranbau sind mit diesen Merkmalen ausgeführte Führungsketten zur Führung von elektrischen Leitungen bekannt und werden dabei häufig als "Energieketten" bezeichnet.

Bei einem Hubgerüst, bei dem die flexible Schlauchleitung den Standmast mit einem benachbarten Ausfahrmast verbindet, ist die Kette mit einem Ende im oberen Bereich des Standmasts und mit dem anderen Ende im mittleren Bereich des Ausfahrmasts befestigt.

Vorzugsweise sind hierbei im unteren Bereich des Standmasts keine Bauteile des Mittels zum Führen der flexiblen Schlauchleitung angeordnet. Das Hubgerüst kann dadurch mit geringem Vorbaumaß an einer Vorderachse des Flurförderzeugs oder an dem Fahrzeugrahmen befestigt werden, da in diesem Bereich kein Bauraum für die flexible Schlauchleitung vorgesehen werden muss.

Mit besonderem Vorteil besteht die Kette im Wesentlichen aus Kunststoff. Die flexible Schlauchleitung ist von einem Hydraulikschlauch gebildet.

Weitere Vorteile und Einzelheiten der Erfindung werden anhand des in der schematischen Figur dargestellten Ausführungsbeispiels näher erläutert.

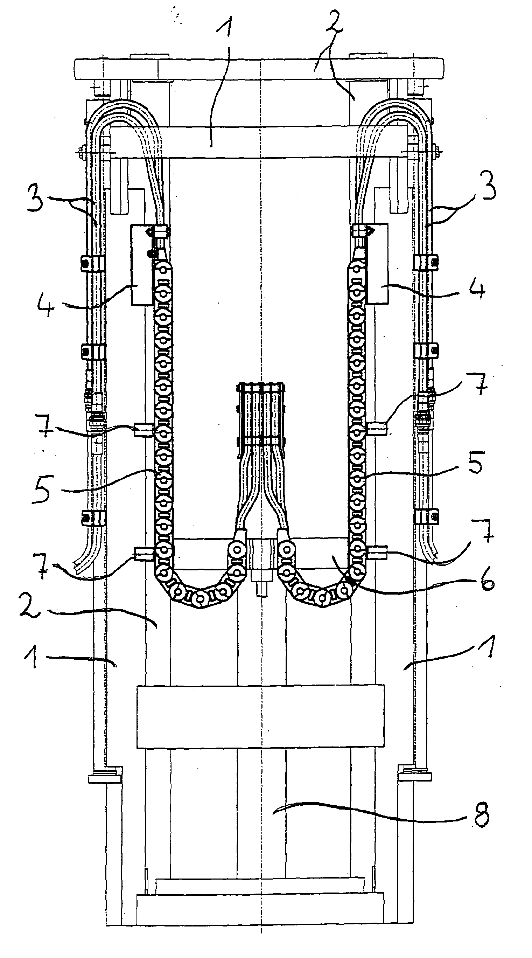

Die Figur zeigt ein erfindungsgemäßes Hubgerüst in der Ansicht vom Fahrerplatz des Flurförderzeugs aus. Das Hubgerüst besitzt einen Standmast 1 und einen entlang des Standmasts 1 nach oben ausfahrbaren Ausfahrmast 2.

Die flexiblen hydraulischen Schlauchleitungen 3 sind an den Außenseiten des Standmasts 1 nach oben geführt, dort umgelenkt und an Befestigungsstücken 4 befestigt. Unterhalb der Befestigungsstücke 4 verlaufen die Schlauchleitungen 3 erfindungsgemäß in Ketten 5, wobei auf jeder Seite des Hubgerüsts eine Kette 5 angeordnet ist. Etwa im mittleren Bereich des Ausfahrmasts 2 sind die Ketten an einer zum Ausfahrmast 2 gehörenden Querstrebe 6 befestigt, wobei die Ketten 5 zwischen den Befestigungsstücken 4 und der Querstrebe 6 mittels eines frei nach unten durchhängenden Bogens um 180 Grad umgelenkt sind. Von der Querstrebe 6 aus sind die Schlauchleitungen 3 über eine Umlenkrolle 7, welche an dem ausfahrbaren Kolben eines Freihubzylinders 8 gelagert ist, zu einem nicht dargestellten Hubschlitten geführt.

Die Ketten 5 sind erfindungsgemäß derart ausgeführt, dass die Position der flexiblen Schlauchleitungen formschlüssig durch die Kettenglieder festlegt ist. Position und Lage der ersten, an den Befestigungsstücken 4 angeordneten Kettenglieder sind durch die Befestigungsstücke 4 festgelegt. Die sich daran anschließenden Kettenglieder können sich ausschließlich in der Ebene des Hubgerüsts, also nicht nach vorne oder nach hinten bewegen. Darüber hinaus sind die Kettenglieder derart ausgeführt, dass eine Krümmung der Ketten 5 jeweils nur zur Hubgerüstmitte hin möglich ist. Damit wird ein Bewegen oder ein Schwingen der Ketten 5 mit den darin befindlichen Schlauchleitungen zur Außenseite des Hubgerüsts hin verhindert, was zusätzlich durch Anschlagelemente 7 sichergestellt ist.

## Patentansprüche

1. Hubgerüst für ein Flurförderzeug mit einem nicht anhebbaren Standmast (1) und mindestens einem an dem Standmast (1) verschiebbar geführten Ausfahrmast (2), wobei mindestens eine flexible Schlauchleitung (3) vorgesehen ist, die den Standmast (1) mit dem Ausfahrmast (2) und gegebenenfalls einen ersten Ausfahrmast (2) mit einem zweiten Ausfahrmast (2) verbindet und wobei das Hubgerüst ein Mittel zum Führen der flexiblen Schlauchleitung (3) aufweist, **dadurch gekennzeichnet, dass** das Mittel zum Führen der flexiblen Schlauchleitung (3) von einer Kette (5) gebildet ist.

2. Hubgerüst nach Anspruch 1, **dadurch gekennzeichnet, dass** die Kette (5) derart ausgeführt ist, dass als Relativbewegung zweier miteinander verbundener Kettenglieder ausschließlich ein Verdrehen um eine einzige Achse vorgesehen ist.

3. Hubgerüst nach Anspruch 1 oder 2, **dadurch gekennzeichnet, dass** die Kette (5) derart ausgeführt ist, dass, ausgehend von einer Längsausrichtung zweier miteinander verbundener Kettenglieder, die Kettenglieder relativ zueinander nur in einer einzigen Richtung verdrehbar sind.

4. Hubgerüst nach einem der Ansprüche 1 bis 3, **dadurch gekennzeichnet, dass** die Kette (5) derart ausgeführt ist, dass mindestens ein Kettenglied formschlüssig mit der flexiblen Schlauchleitung (3) verbindbar ist.

5. Hubgerüst nach einem der Ansprüche 1 bis 4, **dadurch gekennzeichnet, dass** die Kette (5) mit einem Ende im oberen Bereich des Standmasts (1) und mit dem anderen Ende im mittleren Bereich des Ausfahrmasts (2) befestigt ist.

6. Hubgerüst nach einem der Ansprüche 1 bis 5, **dadurch gekennzeichnet, dass** im unteren Bereich des Standmasts (1) keine Bauteile des Mittels zum Führen der flexiblen Schlauchleitung (3) angeordnet sind.

7. Hubgerüst nach einem der Ansprüche 1 bis 6, **dadurch gekennzeichnet, dass** die Kette (5) im Wesentlichen aus Kunststoff besteht.

8. Hubgerüst nach einem der Ansprüche 1 bis 7, **dadurch gekennzeichnet, dass** die flexible Schlauchleitung (3) von einem Hydraulikschlauch gebildet ist.
